# EUROPEAN PATENT APPLICATION

(11) **EP 4 794 191 A1**
(43) Date of publication of application: **19.08.2026**
(21) Application number: 25158257.3
(22) Date of filing: 17.02.2025
(51) Int. Cl.: H02S 20/23, H02S 20/24

(54) **PHOTOVOLTAIC PANEL SUPPORT DEVICE AND METHOD OF INSTALLING PART OF A PHOTOVOLTAIC SYSTEM**

(71) Applicant: Ry-Lo Projecten Beheer B.V., 2546 ST 's-Gravenhage (NL)
(72) Inventor: Sealiti, Abdel Mounaim, 2546 ST 's-Gravenhage (NL); Peters, Jeroen, 2546 ST 's-Gravenhage (NL)
(74) Representative: Arnold & Siedsma

(57) **Abstract**

A photovoltaic panel support device for supporting a lateral edge of a photovoltaic panel in a row of photovoltaic panels is disclosed. The photovoltaic panel support device comprises a support body, which comprises a lower base portion for placement on a surface, such as a flat roof, and an elongated upper support portion for supporting the lateral edge of the photovoltaic panel. The elongated upper support portion comprises a cable support portion in which at least one cable passage is formed that is arranged transverse to the longitudinal direction of the elongated upper support portion. The cable support portion is arranged for holding a pair of electrical cables for the row of photovoltaic panels at a mutual distance in the at least one cable passage.

## Description

The present invention relates to a photovoltaic panel support device for supporting at least part of a photovoltaic panel, wherein the photovoltaic panel support device comprises a support body, which comprises a lower base portion for placement on a surface, such as a flat roof, and an upper support portion for supporting said part of the photovoltaic panel. The present invention further relates to a method of installing part of a photovoltaic system, wherein the method comprises the step of providing such a photovoltaic panel support device.

In the solar industry, specifically the field of photovoltaic installations, various support devices for supporting photovoltaic panels are known. In one example, the support comprises a structure in the form of a metal frame, supporting one or more photovoltaic panels. In another example, the support comprises a plastic body and is to be arranged in an array of such supports. To keep the support in place, the support may be filled with ballast or may be fastened to the surface.

In a photovoltaic installation, the photovoltaic panels are often arranged in parallel rows, with their lateral edge adjacent to a lateral edge of a neighbouring panel in the same row. Such photovoltaic installations further comprise electrical wiring to connect an array of panels to an inverter. Specifically, the array of panels often comprises multiple strings, wherein each string comprises multiple panels connected in series. To enhance the safety and lifetime of the installation, the electrical cables and connectors should be protected as part of proper electrical cable management. For instance, if the cables hang freely or rest on, e.g., the ground or roof surface, they may, as a result, end up in a puddle of water, which can result in insulation failure, short-circuiting or electric arcs. To avoid weathering and the deterioration of the electrical cables, the cables and connectors are tied up. Untethered cables are furthermore less efficient in terms of maintenance.

The cables are usually tied up using tie-wraps. Plastic tie-wraps however have a considerably limited lifespan when they are exposed to temperature volatility and ultraviolet radiation, as is generally the case when they are used in a rooftop photovoltaic installation. Therefore, more expensive UV-resistant tie-wraps are nowadays used more often.

In practice, especially in the case of smaller photovoltaic installations such as on residential rooftops, proper electrical cable management is often overlooked during the planning and installation of the photovoltaic system, even though sloppy cable management can shorten the lifespan of the installation and result in unsafe situations and increased maintenance costs.

It is therefore an object of the present invention, amongst other objects, to at least alleviate at least part of the above-noted drawbacks of existing photovoltaic installations and installation practices, in particular by facilitating proper electrical cable management. More particularly, it is an object to provide an improved photovoltaic panel support device.

Hereto, a photovoltaic panel support device for supporting a lateral edge of a photovoltaic panel in a row of photovoltaic panels is provided, wherein the photovoltaic panel support device comprises a support body, which comprises a lower base portion for placement on a surface, such as a flat roof, and an elongated upper support portion for supporting the lateral edge of the photovoltaic panel, wherein at least one end of the elongated upper support portion comprises a cable support portion in which at least one cable passage is formed that is arranged transverse to the longitudinal direction of the elongated upper support portion, wherein the cable support portion is arranged for holding a pair of electrical cables for the row of photovoltaic panels at a mutual distance in the at least one cable passage.

By providing a cable support portion in the support body, fewer tie-wraps, cable trays or other cable supporting means for supporting the cables in the row of panels are required. This facilitates proper electrical cable management and can reduce the number of components and materials for the installation of the photovoltaic panels. As the cable support portion is arranged in the upper support portion of the photovoltaic panel support device, it can be prevented that the cable sections extending between two consecutive support devices rest on the surface below, such as the ground or roof. As the at least one cable passage is arranged transverse to the longitudinal direction of the elongated upper support portion, the cable support portion can hold the cables in the same orientation as the direction of the row of photovoltaic panels.

Furthermore, as the cables are supported through the panel support portion, the cables are conveniently tied up near the panel such that mechanical stress near or in the electrical connectors connected to the panel can be minimised, thereby further enhancing the lifetime of the installation.

Especially in the case of smaller photovoltaic installations such as on residential rooftops, installers too often do not separate the plus and minus cables for respectively positive and negative voltage, which can be dangerous due to electric arcs, as direct current does not exhibit the same interference as alternating current would. This can thus form a fire hazard. By arranging the cable support portion to hold the cables at a mutual distance, the plus and minus cables for the photovoltaic panels can be held separate in a convenient manner.

Furthermore, in some cases, induction loops are installed by accident, which can increase the risk of overvoltage in the photovoltaic system when exposed to lightning discharges. It is therefore preferred if the cables are not mutually spaced too far, to reduce the risk of an induction loop. The plus and minus cables are thus preferably held sufficiently close to each other and, at the same time, sufficiently separate to prevent electric arcs.

The photovoltaic panel may be supported at its lateral edges by respective upper support portions of a pair of mutually spaced support devices. The support devices can then be easily placed at a mutual distance in dependence of the size of the photovoltaic panel, such that the pair of support devices is suitable for a variety of photovoltaic panel sizes. Moreover, a single upper support portion may be arranged for simultaneously supporting mutually adjacent lateral edges of respective neighbouring panels in the row of panels.

Alternatively, the photovoltaic panel support device may comprise a pair of elongated upper support portions for respectively supporting the lateral edges of a photovoltaic panel.

In case only one cable passage is formed in the cable support portion, the cable support portion may comprise at least two separate cable holding portions arranged in the one cable passage for holding the electrical cables at said mutual distance. Thereto, the cable holding portions are mutually spaced in a direction other than the longitudinal direction of the cables.

According to a preferred embodiment of the photovoltaic panel support device, instead of only one cable passage, at least two cable passages are formed in the cable support portion, wherein the two cable passages are mutually spaced. Preferably, the cable support portion is arranged for separately supporting the electrical cables in respectively the two cable passages. This way, the electrical cables can be conveniently and securely held at a mutual distance. It is, thereto, further preferred if the cable passages are slot shaped, preferably closed slot shaped.

As mentioned above, an array of photovoltaic panels often comprises multiple strings. The maximum number of panels per string is limited in dependence of the specific inverter employed, such that more than one string of panels may form the same row of panels. It may then for instance be preferred if, in a string, the pair of plus and minus cables for the respective string can be held separate from the plus and minus cables for the consecutive strings. To that end, according to a further preferred embodiment of the photovoltaic panel support device, each end of the elongated upper support portion comprises a respective cable support portion in which at least one cable passage is formed that is arranged transverse to the longitudinal direction of the elongated upper support portion. Preferably, each cable support portion is arranged for holding a respective pair of electrical cables at a mutual distance in the respective at least one cable passage. Advantageously, in a first string, a first pair of electrical cables for the first string can be supported by a first cable support portion and a second pair of electrical cables for a consecutive second string can be supported by a second cable support portion.

According to another aspect, a photovoltaic panel support device for supporting at least part of a photovoltaic panel is provided, preferably according to any of the above embodiments, wherein the photovoltaic panel support device comprises a support body, which comprises a lower base portion for placement on a surface, such as a flat roof, and an upper support portion for supporting said part of the photovoltaic panel. The upper support portion may be elongated for supporting a lateral edge of a photovoltaic panel or mutually adjacent lateral edges of respective neighbouring panels in a row of photovoltaic panels.

Each end of the elongated upper support portion may comprise a respective end support section, wherein the end support sections are arranged for respectively supporting opposite ends of the lateral edge of the photovoltaic panel. In such an embodiment, the elongated upper support portion for supporting a lateral edge of a photovoltaic panel may also be suitable for supporting the longitudinal edges of the photovoltaic panel more centrally, i.e., at a distance from said lateral edge, such that a panel segment that comprises the lateral edge can extend beyond the upper support portion in an overhanging manner. Similarly, the elongated upper support portion may support the lateral edge of the photovoltaic panel more centrally, i.e., at a distance from at least one of the longitudinal edges, such that a panel segment that comprises the longitudinal edge can extend beyond the elongated upper support portion in the longitudinal direction thereof in an overhanging manner. The support device thus allows the panel to extend beyond the upper support portion and is therefore suitable for a variety of photovoltaic panel sizes.

According to a further preferred embodiment of the photovoltaic panel support device, the upper support portion comprises a centre support section for supporting a centre of the lateral edge of the photovoltaic panel. By supporting the panel at a centre of the panel or the centre of an edge thereof, sagging of the panel can be prevented. The centre support section is preferably arranged between the end support sections.

The upper support portion may comprise a cable support portion in which at least one cable passage is formed, preferably as described above. The cable support portion is preferably arranged for holding a pair of electrical cables for the photovoltaic panel at a mutual distance in the at least one cable passage. For instance, in the cable support portion at least two mutually spaced cable passages may be formed, which may be slot shaped, preferably closed slot shaped. Preferably, the at least one cable passage is formed in a respective support section, such that the electrical cables can be supported close to the panel supported by the support section. Furthermore, because the panel rests on the support section, the support section may be enhanced in terms of material relative to the support body overall. That is, the support section may be strengthened relative to the rest of the support body by using relatively more material in the support section, as the force exerted on the support body by the weight of the panel is concentrated in the support section. Accordingly, by forming the at least one cable passage in the support section, the respective support functions are efficiently combined in the enhanced support section.

The upper support portion may be arranged for supporting the photovoltaic panel at an angle relative to a bottom surface of the lower base portion, such that the photovoltaic panel is inclined. Preferably, one end support section is arranged higher than the other end support section. It is then further preferred if the upper end support section is arranged for supporting the lateral edge of the photovoltaic panel more centrally, i.e., at a distance from an upper longitudinal edge of the photovoltaic panel, such that a panel segment that comprises the upper longitudinal edge can extend beyond the upper support portion in an overhanging manner.

Specifically, to support a panel in an inclined manner, the support body may be substantially triangular as viewed from the side, wherein the upper support portion is arranged at an acute angle relative to the bottom surface of the lower base portion at the lower end support section.

The lower end support section may be arranged for supporting a lower longitudinal edge of the photovoltaic panel. This way, a distance between the photovoltaic panel, in particular its lower edge, and the surface below, such as the ground or roof, can be ensured irrespective of the size of the photovoltaic panel. As a minimum height of the lower edge of the panel is ensured, damage due to, for example, gravel can be prevented. Specifically, the lower end support section may comprise a lower support edge arranged for supporting the lower longitudinal edge of the photovoltaic panel. The panel can then be conveniently positioned on the support device by first resting the lower longitudinal edge of the panel on the lower support edge of the lower end support section and, subsequently, lowering the panel onto the other one or more support sections.

According to a further preferred embodiment of the photovoltaic panel support device, the support body further comprises a coupling member arranged for coupling the photovoltaic panel support device to a corresponding photovoltaic panel support device supporting a part, such as a lateral edge, of a photovoltaic panel in an adjacent row of photovoltaic panels. As the support body comprises such a coupling member, no additional coupling means for mutually coupling photovoltaic panel support device in adjacent rows of panels are required. This facilitates assembly of the photovoltaic installation, in particular the support structure thereof, and can reduce the number of components and materials in the installation. Preferably, the coupling member is spaced from the lower end support section in the longitudinal direction of the elongated upper support portion. As the coupling members maintain a distance between the photovoltaic panels in adjacent rows of panels, an intermediate path can be formed for maintenance.

According to a further preferred embodiment of the photovoltaic panel support device, the support body is provided with a recess defining a space for a power electronics device such as a microinverter or an optimiser, wherein the recess is arranged for receiving the power electronics device in the space. To illustrate, microinverters are generally mounted to the bottom of the panel and convert DC power from the panels into AC power that can be sent into the grid. Microinverters allow for the optimisation of each panel in the string when shading of a panel in the string occurs and, furthermore, can provide specific data of individual panels. The recess is preferably formed in the upper support portion of the support body, wherein the space is at least upwardly open for receiving a power electronics device mounted to the bottom of the panel supported by the support device, such that the power electronics device can be conveniently accommodated.

The upper support portion may comprise a pair of end support sections arranged for respectively supporting respective ends of the photovoltaic panel, preferably as described above. In that case, the recess is preferably provided between the end support sections. Furthermore, if one end support section is arranged higher than the other end support section for supporting the photovoltaic panel at an angle relative to a bottom surface of the lower base portion, then the recess is preferably provided between the upper end support section and the centre support section. This way, the recess can be conveniently formed at a sufficient distance from the lower base portion without the need to raise the entire upper support portion relative to the lower base portion.

According to a further preferred embodiment of the photovoltaic panel support device, the support body is made of a roofing material, a shredded electrical cable material or a polymer material, preferably recycled plastic or polyvinyl chloride. Shredded electrical cables are substantially fireproof and a material can be manufactured therefrom that is, in general, sufficiently flexible to be adapted to application as a support body to be placed on, e.g., a roof. The supports are preferably provided with a bottom layer of, for example, felt to prevent possible damage to the roof from metal parts that might still be present in the material.

According to a further preferred embodiment of the photovoltaic panel support device, the support body is monolithic. Such a single-piece support body can be conveniently transported and installed.

The support body is preferably solid, i.e., not hollow, and is preferably not made of a foam-like material. Providing a photovoltaic panel support device with any of the features of the above embodiments is particularly advantageous if the support device is solid and/or is manufactured from a roofing material, a shredded electrical cable material or a polymer material, preferably recycled plastic or polyvinyl chloride. Preferably, the photovoltaic panel support device is manufactured by injection-moulding.

According to a further aspect, a method of installing part of a photovoltaic system is provided, wherein the method comprises the step of providing at least one photovoltaic panel support device for supporting at least part of a photovoltaic panel, preferably according to any of the above embodiments, wherein the photovoltaic panel support device comprises a support body, which comprises a lower base portion for placement on a surface, such as a flat roof, and an upper support portion for supporting said part of the photovoltaic panel. In case the upper support portion comprises a cable support portion in which at least one cable passage is formed, the method may further comprise the steps of providing a pair of electrical cables for a photovoltaic panel and arranging the electrical cables at a mutual distance in the at least one cable passage formed in the upper support portion of the photovoltaic panel support device. The method may further comprise the step of providing a photovoltaic panel on the at least one photovoltaic panel support device and, optionally, electrically connecting the electrical cables to the photovoltaic panel.

Additionally, or alternatively, in case the support body of the photovoltaic panel support device is provided with a recess defining a space, the method may comprise the steps of providing a power electronics device, such as a microinverter or an optimiser, and arranging the power electronics device in the space.

The invention is hereinafter further elucidated with reference to the attached drawings, wherein:
- Figure 1 represents an isometric view of a photovoltaic panel support device;
- Figure 2 represents a side view of the photovoltaic panel support device;
- Figure 3 represents a top view of mutually coupled photovoltaic panel support devices in adjacent rows of photovoltaic panels;
- Figure 4 represents a side view of the mutually coupled photovoltaic panel support devices;
- Figure 5 represents a sectional close-up view of an end support section of the photovoltaic panel support device for supporting an end of a photovoltaic panel;
- Figure 6 represents an isometric view of a fastening means for fastening the photovoltaic panel to the end support section.

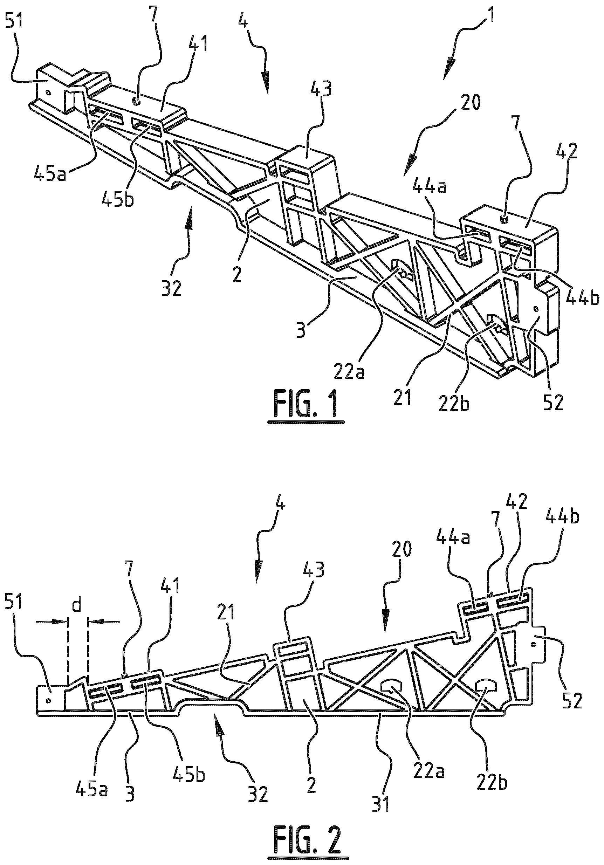

Figures 1 and 2 show a photovoltaic panel support device 1 comprising a substantially triangular solid support body 2, which comprises an elongated lower base portion 3 for placement on a surface, such as a flat roof, and an elongated upper support portion 4. The elongated upper support portion 4 comprises, at either end thereof, respectively a lower end support surface 41 and an upper end support surface 42 and, at its centre, a centre support surface 43. The support surfaces 41, 42, 43 are coplanar and are inclined relative to a bottom surface 31 of the lower base portion 3 for supporting a lateral edge of a photovoltaic panel at an angle, such that the photovoltaic panel can be entirely supported by a cooperating pair of mutually spaced support devices 1 of this kind. Multiple photovoltaic panels may be arranged in parallel rows, with their lateral edge adjacent to a lateral edge of a neighbouring panel in the same row.

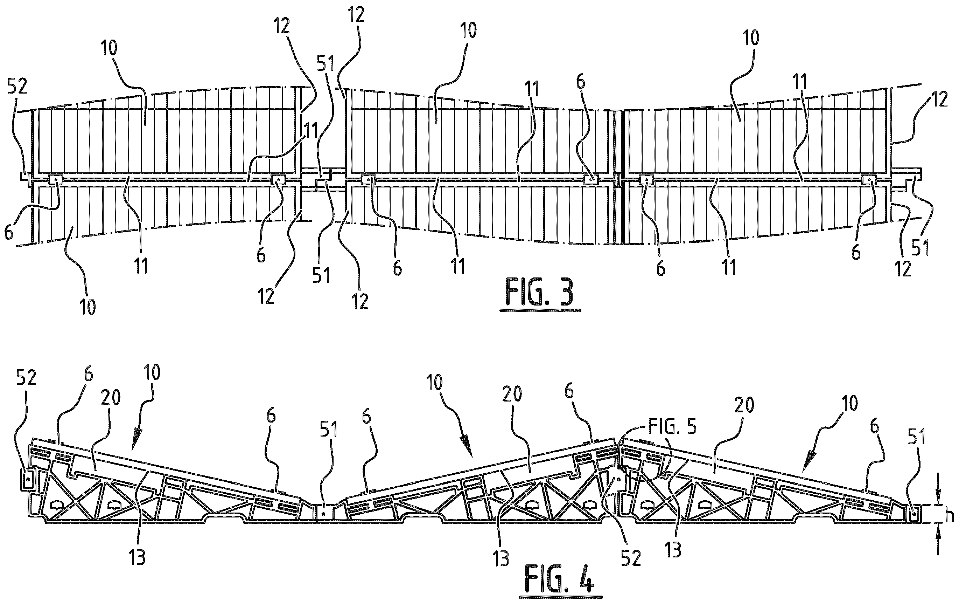

The support body 2 further comprises a front coupling member 51, at a distance d from the lower end support surface 41, and a rear coupling member 52 for coupling the support device 1 on either side to corresponding coupling members 51, 52 of corresponding photovoltaic panel support devices 1 belonging to respective adjacent rows, as shown in Figures 3 and 4, wherein the support devices 1 are coupled front-to-front and back-to-back to form a support structure for a photovoltaic system with an east-west configuration. The mutually cooperating coupling members 51, 52 of adjacent devices 1 are correspondingly shaped and arranged to interlock. As illustrated, a single support device 1 can simultaneously support mutually adjacent lateral edges 11 of respective neighbouring panels 10 of the same row.

Each row of photovoltaic panels 10 may comprise multiple strings. In both ends of the elongated upper support portion 4, a respective pair of mutually spaced cable passage slots 44a, 44b, 45a, 45b, is formed for separately supporting a respective pair of electrical plus and minus cables (not shown) for a respective string of the row of photovoltaic panels 10. Thus, the cable pair for a string can be held in the upper pair of slots 44a, 44b separate from the cable pair for a consecutive string held in the lower pair of slots 45a, 45b.

At the lower end of the lower end support surface 41, an adjacent lower support edge 46 is provided for supporting a lower longitudinal edge 12 of the photovoltaic panel 10 to ensure a minimum height h between the lower edge 12 of the photovoltaic panel 10. The lateral edge 11 of the panel 10 can be positioned on the support device 1 by first resting the lower longitudinal edge 12 of the panel 10 on the lower support edge 46 and, subsequently, lowering the lateral edge 11 of the panel 10 onto the support surfaces 41, 42, 43.

The support body 2 is provided with a recess 20 formed in the upper support portion 4 between the upper end support surface 42 and the centre support surface 43 for receiving a microinverter (not shown) mounted to the bottom 13 of a panel 10.

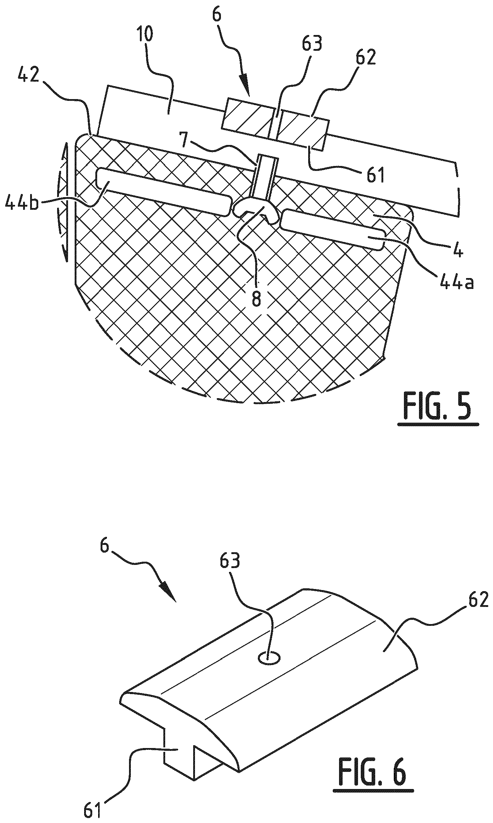

Once the mutually adjacent lateral edges 11 of respective neighbouring panels 10 of the same row are positioned on the upper support portion 4, the edges 11 are fastened to the support portion 4 by means of a clamping member 6 as shown in Figures 5 and 6. The clamping member 6 has a T-shaped cross-section, thus comprising a stem 61 and a flanged top 62. The stem 61 is inserted between the mutually adjacent lateral edges 11 of the panels 10 such that the flanged top 62 rests atop the edges 11 of the panels 10. The clamping member 6 is fastened to the upper support portion 4 of the panel support device 1 by passing a bolt (not shown) through the clamping member 6 via a hole 63 extending from the flanged top 62 through the stem 61, wherein the bolt is subsequently inserted into a coupling nut 7 inserted in the upper support portion 4 of the panel support device 1 and kept in place by a wing bolt 8 arranged in the upper support portion 4 of the panel support device 1.

Referring again to Figures 1 and 2, the support body 2 is monolithic and is provided with a strengthening rib structure 21 to maintain rigidity in spite of a minimal material use for manufacturing the support body 2 for material-efficiency.

Furthermore, the support body 2 comprises a connector support portion in which one or more connector passages 22a, 22b are formed transversely through the support body 2. In the connector passages 22a, 22b which are mutually spaced, a pair of electrical connectors for connecting the string of photovoltaic panels 10 to an inverter can be held at a mutual distance.

The lower base portion 3 of the support body 2 is provided with a handgrip recess 32 to facilitate manually lifting the photovoltaic panel support device 1 when it is placed with its lower base portion 3 on a flat surface.

With the improved photovoltaic panel support device 1 described above and shown in the drawings, installation of a photovoltaic system can be facilitated.

The drawings and the above description serve to illustrate specific embodiments of the invention and do not limit the scope of protection defined by the appended claims.

## Claims

1. Photovoltaic panel support device for supporting a lateral edge of a photovoltaic panel in a row of photovoltaic panels, wherein the photovoltaic panel support device comprises a support body, which comprises a lower base portion for placement on a surface, such as a flat roof, and an elongated upper support portion for supporting the lateral edge of the photovoltaic panel, wherein at least one end of the elongated upper support portion comprises a cable support portion in which at least one cable passage is formed that is arranged transverse to the longitudinal direction of the elongated upper support portion, wherein the cable support portion is arranged for holding a pair of electrical cables for the row of photovoltaic panels at a mutual distance in the at least one cable passage.

2. Photovoltaic panel support device according to claim 1, wherein at least two cable passages are formed in the cable support portion, wherein the two cable passages are mutually spaced, wherein the cable support portion is arranged for separately supporting the electrical cables in respectively the two cable passages, wherein the cable passages are preferably slot shaped, more preferably closed slot shaped.

3. Photovoltaic panel support device according to claim 1 or 2, wherein each end of the elongated upper support portion comprises a respective cable support portion in which at least one cable passage is formed that is arranged transverse to the longitudinal direction of the elongated upper support portion, wherein each cable support portion is arranged for holding a respective pair of electrical cables at a mutual distance in the respective at least one cable passage.

4. Photovoltaic panel support device according to any of the preceding claims, wherein each end of the elongated upper support portion comprises a respective end support section, wherein the end support sections are arranged for respectively supporting opposite ends of the lateral edge of the photovoltaic panel

5. Photovoltaic panel support device according to claim 4, wherein the at least one cable passage is preferably formed in the respective support section.

6. Photovoltaic panel support device according to claim 4 or 5, wherein the elongated upper support portion further comprises a centre support section arranged between the end support sections for supporting a centre of the lateral edge of the photovoltaic panel.

7. Photovoltaic panel support device according to claim 4, 5 or 6, wherein the support body is provided with a recess between the end support sections, wherein the recess defines a space for a power electronics device such as a microinverter or an optimiser, wherein the recess is arranged for receiving the power electronics device in the space, wherein the recess is preferably provided between the upper end support section and the centre support section.

8. Photovoltaic panel support device according to any of the preceding claims 4 - 7, wherein the elongated upper support portion is arranged for supporting the lateral edge of the photovoltaic panel at an angle relative to a bottom surface of the lower base portion, wherein one end support section is arranged higher than the other end support section.

9. Photovoltaic panel support device according to any of the preceding claims 4 - 8, wherein the upper end support section is arranged for supporting the lateral edge of the photovoltaic panel at a distance from an upper longitudinal edge of the photovoltaic panel.

10. Photovoltaic panel support device according to any of the preceding claims 4 - 9, wherein the lower end support section is further arranged for supporting a lower longitudinal edge of the photovoltaic panel, wherein the lower end support section preferably comprises a lower support edge arranged for supporting the lower longitudinal edge of the photovoltaic panel.

11. Photovoltaic panel support device according to claim 10, wherein the support body further comprises a coupling member arranged for coupling the photovoltaic panel support device to a corresponding photovoltaic panel support device supporting a lateral edge of a photovoltaic panel in an adjacent row of photovoltaic panels, wherein the coupling member is spaced from the lower end support section in the longitudinal direction of the elongated upper support portion.

12. Photovoltaic panel support device according to any of the preceding claims, wherein the support body is monolithic.

13. Photovoltaic panel support device according to any of the preceding claims, wherein the support body is made of a roofing material, a shredded electrical cable material or a polymer material, preferably recycled plastic or polyvinyl chloride.

14. Photovoltaic panel support device according to any of the preceding claims, further comprising a bottom layer covering a bottom surface of the lower base portion, wherein the bottom layer is arranged for preventing damage to the surface underneath the lower base portion, wherein the bottom layer preferably comprises felt.

15. Method of installing part of a photovoltaic system, wherein the method comprises the steps of:
- providing a photovoltaic panel support device according to any of the preceding claims;
- providing a pair of electrical cables for a photovoltaic panel;
- arranging the electrical cables at a mutual distance in the at least one cable passage formed in the elongated upper support portion of the photovoltaic panel support device.
